# FASCICULE DE BREVET EUROPEEN

(11) **EP 3 059 143 B1**
(45) Date de publication et mention de la délivrance du brevet: **04.12.2019**
(21) Numéro de dépôt: 16152429.3
(22) Date de dépôt: 22.01.2016
(51) Int. Cl.: B62D 25/08, B60R 21/34

(54) **FACE AVANT POUR VÉHICULE AUTOMOBILE AVEC UN CAPOT**
FRONTPARTIE FÜR KRAFTFAHRZEUG MIT EINER HAUBE
FRONT END FOR MOTOR VEHICLE WITH A BONNET OR HOOD

(30) Priorité: 19.02.2015 FR 1551383
(43) Date de publication de la demande: 24.08.2016
(73) Titulaire: PSA Automobiles SA, 78300 Poissy (FR)
(72) Inventeur: AMIEL, LIONEL, 92320 CHATILLON (FR)

(56) Documents cités:
- EP-A1- 1 352 811
- WO-A1-2006/100379
- WO-A1-2013/175086
- FR-A1- 2 890 621
- FR-A1- 2 919 566
- FR-A1- 2 923 782

## Description

L'invention a trait au domaine des véhicules automobiles. Plus particulièrement, l'invention a trait à l'aptitude d'un véhicule automobile à absorber de l'énergie en cas de choc frontal.

Un système d'absorption de chocs avant pour véhicule automobile est classiquement constitué d'une poutre transversale fixée aux extrémités avant de brancards, via des modules déformables couramment appelés «crashboxes». Les brancards sont deux profilés longitudinaux de la structure avant du véhicule s'étendant dans le prolongement du plancher du véhicule au travers du compartiment avant du véhicule.

Le système d'absorption de chocs avant est aussi classiquement constitué d'éléments situés en dessous et au-dessus de la poutre transversale en question. Ces éléments sont généralement réalisés pour absorber l'énergie d'un choc frontal à faible vitesse par exemple contre un piéton. La partie inférieure du corps d'un piéton est généralement percutée directement par le véhicule. Il est connu et souvent recherché de réaliser les éléments situés à distance en dessous de la traverse principale au même niveau longitudinalement que la traverse principale de manière à ce qu'en cas de choc frontal, la partie basse des jambes du piéton puisse être impactée directement de sorte à faire pivoter le piéton, les jambes partant vers l'avant et la tête partant vers l'arrière. Ce pivotement réduit le risque de passage du piéton sous le véhicule. Il est cependant nécessaire de réaliser le système d'absorption de chocs du véhicule de sorte à réduire la décélération au niveau de la tête du piéton lorsqu'elle percute le véhicule, en général au niveau du capot avant.

Le document de brevet FR 2 890 621 A1 divulgue une face avant de véhicule avec un système d'absorption de chocs comprenant une poutre transversale s'étendant à hauteur de profilés structurels longitudinaux se terminant par des modules déformables. Le système comprend également une traverse inférieure s'étendant sous la poutre principale ainsi qu'une traverse supérieure s'étendant au-dessus de la poutre transversale principale et décalée vers l'arrière. Cette traverse supérieure est en appui sur les profilés longitudinaux via des jambages latéraux s'étendant verticalement entre les profilés et les modules déformables. Ces jambages sont par ailleurs configurés pour soutenir des équipements du véhicule, comme les optiques de phare. Le système comprend en outre un absorbeur de choc s'étendant le long de la face supérieure de la traverse supérieure en question, et occupant l'espace entre la traverse supérieure et le capot. Un tel absorbeur peut être réalisé sous la forme d'un équipement du véhicule. Dans un mode de réalisation particulier, un réservoir de liquide pour lave glace fait office d'absorbeur. Cet enseignement est intéressant en ce que l'absorbeur de choc est situé sous la face intérieure du capot, et facilite la déformation du capot dans une direction majoritairement verticale en cas d'impact de la tête. L'absorbeur de choc est cependant sensiblement encombrant et requiert un agencement adapté des équipements et de leurs moyens de fixation sur la face avant du véhicule. De plus, la solution de ce document ne prévoit pas de serrure de capot à proximité de l'absorbeur.

Le document de brevet FR 2 919 566 A1 divulgue une face avant de véhicule comprenant un système d'absorption de chocs comprenant une poutre transversale s'étendant à hauteur de profilés structurels longitudinaux se terminant par des modules déformables. La poutre transversale comprend une paroi arrière soutenue aux extrémités avant des profilés et une traverse avant enveloppant les modules déformables et en appui contre la paroi arrière. La traverse avant est par ailleurs configurée pour la fixation d'équipements du véhicule tels qu'une traverse inférieure, une serrure de capot et des optiques de phare. Les moyens de fixation de ces équipements s'étendent majoritairement verticalement partant de la traverse avant. Dans un mode particulier de réalisation, la serrure est par exemple située à distance verticalement de la face supérieure de la traverse avant. Une traverse supérieure, s'étendant sous le capot et soutenant le groupe moto ventilateur, est fixée à la poutre transversale via des jambages s'étendant verticalement à ses extrémités latérales à l'aplomb de la paroi arrière. Le système est réalisé de manière à ce que l'énergie d'un choc piéton puisse rompre la fixation de la poutre supérieure à la poutre transversale de sorte à ce que la poutre supérieure puisse basculer en arrière et vers le bas, par pivotement des jambages vers l'arrière. Cet enseignement est intéressant en ce que l'agencement des moyens de fixation des équipements de la face avant, partant de la traverse avant, réduit l'encombrement sous le capot ; cet agencement favorise en particulier la déformation du capot au niveau longitudinal de la poutre transversale. Les moyens de fixation peuvent par exemple fléchir sous le choc vertical. Cette poutre transversale est cependant située longitudinalement très en avant du capot, or le lieu d'impact de la tête du piéton contre le capot est classiquement plus en arrière. L'absorption d'énergie au niveau de la traverse supérieure, qui est plus en arrière, est par ailleurs limitée à un type de choc fortement incliné de la direction verticale permettant le basculement vers l'arrière de la traverse supérieure.

L'invention a pour objectif de proposer une solution palliant au moins un des inconvénients de l'état de l'art, en particulier de l'état de l'art susmentionné. Plus particulièrement, l'invention a pour objectif de proposer un véhicule apte à absorber de manière optimale et économique l'énergie d'un impact majoritairement vertical contre le capot du véhicule à la suite d'un choc frontal contre un piéton.

L'invention a pour objet une face avant pour véhicule automobile avec un capot avant, comprenant : une traverse supérieure ; un élément déformable s'étendant transversalement au-dessus de la traverse supérieure ; remarquable en ce que la traverse supérieure comprend une portion centrale et deux portions latérales de part et d'autre de la portion centrale, ladite portion centrale étant surélevée par rapport auxdites portions latérales et comprenant des moyens de fixation d'une serrure du capot.

Selon des modes particuliers de réalisation, le dispositif de synchronisation peut comprendre l'une ou plusieurs des caractéristiques suivantes, prises isolément ou selon toutes les combinaisons techniquement possibles :
- l'élément déformable prend appui sur la traverse supérieure et est destiné à s'étendre sous le capot.
- l'élément déformable est fixé à la traverse supérieure et comprend des moyens de fixation à un parechoc avant du véhicule.
- l'élément déformable et/ou la traverse supérieure comprennent des moyens de fixation d'un groupe moto ventilateur.
- la portion centrale surélevée s'étend transversalement sur une longueur comprise entre 20% et 70% de la longueur de la traverse supérieure, préférentiellement une longueur comprise entre 40% et 60%.
- la différence entre les hauteurs moyennes d'au moins une des portions latérales de la traverse supérieure et de celle de la portion centrale de ladite traverse est comprise entre 5mm et 50mm, préférentiellement entre 15mm et 25mm.
- L'élément déformable s'étend longitudinalement sur une longueur moyenne comprise entre 50mm et 500mm, préférentiellement entre 150mm et 300mm.
- l'élément déformable forme une poutre transversale épousant la portion centrale et les portions latérales de la traverse supérieure.
- la hauteur moyenne de la poutre transversale au niveau de la portion centrale de la traverse supérieure est comprise entre 20% et 80%, préférentiellement entre 50% et 70%, de la hauteur moyenne de ladite poutre au niveau des portions latérales de ladite traverse.
- la poutre transversale a une hauteur moyenne comprise entre 20mm et 80mm, préférentiellement entre 40mm et 60mm.
- la traverse supérieure forme une cloison s'étendant verticalement vers le bas, la portion centrale de ladite traverse formant une zone en retrait vers l'arrière comprenant les moyens de fixation de la serrure.
- la traverse supérieure et/ou l'élément déformable sont venues par moulage, préférentiellement de matière plastique.
- la face avant a un rendement d'amortissement compris entre 30% et 70% pour un choc ponctuel vertical au niveau de l'élément déformable. Le rendement d'amortissement se définit par le rapport entre l'énergie absorbée et, la force de l'impact multipliée par l'enfoncement dans la face avant.
- la face avant comprend, en outre, des bras de soutien aux ailes de la carrosserie, lesdits bras étant préférentiellement fixés aux extrémités latérales de la traverse supérieure.
- la face avant comprend, en outre, une poutre transversale centrale s'étendant à distance en dessous de la traverse supérieure, ladite poutre étant située longitudinalement en avant de la traverse supérieure, préférentiellement à plus de 20cm en avant.
- La face avant comprend, en outre, une traverse inférieure s'étendant à distance sous la poutre transversale centrale et destinée, en cas de choc contre un piéton, à être en contact avec le bas des jambes du piéton, en vue de générer un basculement du piéton vers l'arrière.

L'invention a également pour objet un véhicule automobile, comprenant une face avant ; une carrosserie enveloppant la face avant ; un capot formant la face supérieure de la carrosserie, remarquable en ce que la face avant est conforme à l'invention.

Selon un mode avantageux de l'invention, l'élément déformable s'étend transversalement sur une largeur comprise entre 10% et 90% de la largeur de la carrosserie, préférentiellement entre 50% et 85%, plus préférentiellement encore entre 60% et 80%.

Selon un mode avantageux de l'invention, le véhicule comprend un système d'absorption de choc avant comprenant deux profilés longitudinaux, des « crashboxes » fixées aux extrémités avant desdits profilés et s'étendant vers l'avant, les extrémités avant desdites « crashboxes » recevant la poutre transversale centrale de la face avant.

Selon un mode avantageux de l'invention, le système d'absorption comprend des moyens de fixation entre les extrémités avant des profilés longitudinaux et les traverses inférieure et supérieure.

Les mesures de l'invention sont intéressantes en ce que la face avant du véhicule est apte à amortir un choc contre le capot du véhicule dans une direction majoritairement verticale en cas de choc avant contre un piéton ; l'absorption d'énergie du choc est réalisée à un niveau du capot, dans la direction longitudinale du véhicule, susceptible de recevoir la tête d'un piéton en cas de choc piéton. La réalisation de la face avant est optimisée en ce qu'elle ne requiert pas de réagencement des équipements du compartiment moteur et/ou de leurs moyens de fixation.

D'autres caractéristiques et avantages de la présente invention seront mieux compris à l'aide de la description et des dessins parmi lesquels :
- La figure 1 est une vue de côté d'un véhicule automobile lors d'un choc avant contre un piéton ;
- La figure 2 est une vue partielle de la face avant conforme à l'invention du véhicule de la figure 1 ;
- La figure 3 est une vue de la traverse supérieure de la face avant de la figure 2 ;

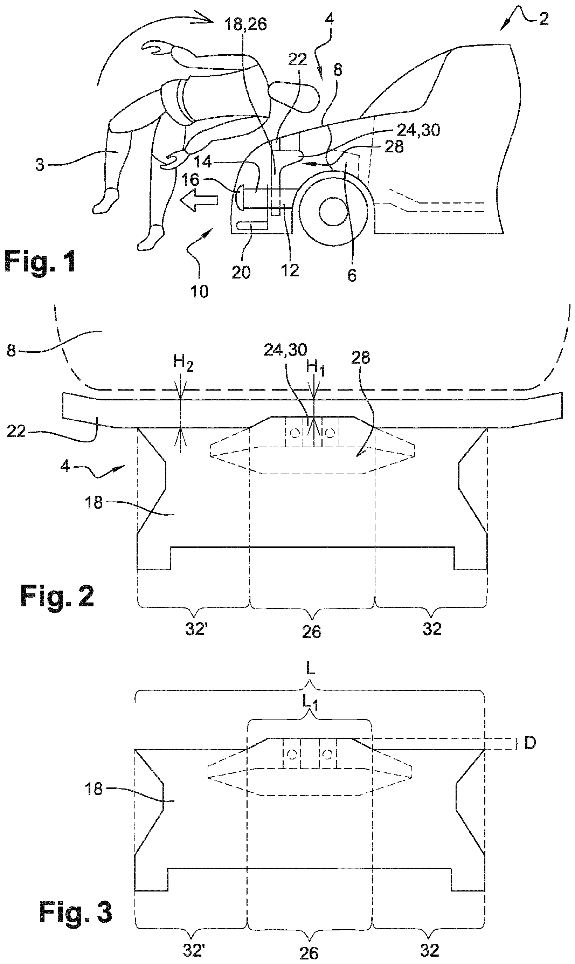

La figure 1 est une vue de côté d'un véhicule automobile 2 conforme à l'invention lors d'un choc avant contre un piéton 3. Le véhicule 2 comprend une face avant 4, une carrosserie 6 enveloppant la face avant 4 et un capot avant 8 formant la face supérieure de la carrosserie 6. On peut voir sur l'image une vue partielle en coupe longitudinale de la face avant 4. Le véhicule 2 comprend un système d'absorption 10 de choc avant: ce système comprend deux profilés longitudinaux 12, des crashboxes 14 fixées aux extrémités avant des profilés 12 et une poutre transversale centrale 16 s'étendant en avant des crashboxes 14. Le système d'absorption 10 comprend également une traverse supérieure 18, une traverse inférieure 20 ainsi que des moyens de fixation de ces traverses supérieure et inférieure 18 et 20 partant des extrémités avant des profilés longitudinaux 12. On peut voir que la traverse inférieure 20 s'étend à distance sous la poutre transversale centrale 16, elle est cependant située longitudinalement à niveau de la poutre transversale centrale 16 ; la traverse inférieure 20 est en effet destinée, en cas de choc contre un piéton, à être en contact avec le bas des jambes du piéton 3, en vue de générer un basculement du piéton vers l'arrière. Ce basculement du piéton est illustré sur l'image. On peut également voir que la poutre transversale centrale 16, s'étendant à distance en dessous de la traverse supérieure 18, est située longitudinalement en avant de la traverse supérieure 18, préférentiellement à plus de 20cm en avant. La traverse supérieure 18 est longitudinalement à un niveau de la face avant 4 auquel la tête du piéton est susceptible d'impacter. La face avant 4 du véhicule 2 comprend, en outre, une poutre déformable 22 s'étendant transversalement sous le capot 8 et qui est montée sur la face supérieure de la traverse supérieure 18. Cette poutre transversale déformable 22 peut s'étendre longitudinalement sur une longueur moyenne comprise entre 50mm et 500mm, préférentiellement entre 150mm et 300mm. La face avant 4 comprend enfin une serrure 24 de fermeture de capot 8 montée sur la traverse supérieure 18. On peut voir que la traverse supérieure 18 forme une cloison s'étendant verticalement vers le bas ; la traverse supérieure 18 vue en coupe longitudinale sur l'image présente une portion centrale 26 de la traverse 18. Cette portion centrale 26 comprend dans sa partie supérieure une zone en retrait 28 vers l'arrière, cette zone 28 étant celle au bout de laquelle sont situés des moyens de fixation 30 de la serrure 24 du capot. La portion centrale 26 est une portion surélevée de la traverse supérieure 18, nous l'aborderons plus en détail en relation avec la figure 2 ; on peut observer toutefois que la zone en retrait 28 comprenant les moyens de fixation 30 de la serrure est située directement en dessous de la face supérieure de la traverse 18 au niveau de la portion centrale 26 de la traverse supérieure 18.

La figure 2 est une vue de la face avant 4 conforme à l'invention du véhicule automobile dans un mode particulier de réalisation. Le capot 8 du véhicule est représenté en pointillé. La face avant 4 comprend la poutre transversale déformable 22 et la traverse supérieure 18 sur laquelle est fixée la poutre transversale. On remarque en particulier sur l'image la portion centrale surélevée 26 de la traverse supérieure 18 ainsi que la zone en retrait 28 de cette portion centrale 26 comprenant les moyens de fixation 30 de la serrure 24 du capot 8. La traverse supérieure 18 comprend, en outre, deux portions latérales 32 et 32' de part et d'autre de la portion centrale surélevée 26, la portion centrale surélevée 26 étant surélevée par rapport aux deux portions latérales 32 et 32' en question. La poutre transversale déformable 22 s'étend sur 90% de la largeur de la carrosserie (non représentée) et prend appui sur la face supérieure de la traverse supérieure 18 ; la poutre transversale 22 épouse en l'occurrence la portion centrale 26 ainsi que les portions latérales 32 et 32' de la traverse supérieure 18. La hauteur moyenne « H₁ » de la poutre transversale au niveau de la portion centrale 26 de la traverse supérieure est comprise entre 50% et 70%, de sa hauteur moyenne « H₂ » au niveau des portions latérales 32 et 32' de la traverse supérieure 18. La poutre transversale déformable 22 peut avoir, sur toute sa longueur, une hauteur moyenne comprise entre 40mm et 60mm. Enfin, la poutre transversale 22 comprend des moyens de fixation (non représentés) d'un parechoc avant, la poutre 22 en question et la traverse supérieure 18 comprennent également des moyens de fixation d'un groupe moto ventilateur du véhicule et des optiques de phares, ces équipements n'étant pas représentés. La traverse supérieure 18 et/ou la poutre transversale déformable 22 sont venues par moulage de matière plastique. Le mode de réalisation particulier ici présenté ne limite aucunement l'invention, la face avant 4 du véhicule peut être réalisée par un ou plusieurs éléments déformables s'étendant transversalement au-dessus de la traverse supérieure 18. On peut définir le rendement d'amortissement d'un choc vertical sur le capot 8 du véhicule au niveau de la poutre transversale déformable 22 comme le rapport entre une énergie absorbée par la face avant 4 au niveau de la poutre transversale 22 et, la force d'un tel impact vertical sur le capot 8 au niveau de ladite poutre 22 multipliée par l'enfoncement de la face avant 4 à ce même niveau. La face avant ainsi réalisée peut avoir un rendement d'amortissement compris entre 30% et 70% pour un choc ponctuel vertical au niveau de la poutre transversale 22. La face avant 4 peut comprendre, en outre, des bras de soutien aux ailes de la carrosserie (non représentés), ces bras peuvent être fixés aux extrémités latérales de la traverse supérieure.

La figure 3 est une vue de la traverse supérieure 18 conforme à l'invention de la face avant du véhicule. La portion centrale surélevée 26 de la traverse supérieure 18 s'étend transversalement sur une longueur « L₁ » comprise entre 20% et 70% de la longueur «L» de la traverse supérieure 18, préférentiellement une longueur comprise entre 40% et 60%. La différence « D » entre la hauteur moyenne des portions latérales 32 et 32' de la traverse supérieure 18 et la hauteur moyenne de la portion centrale 26 de ladite traverse 18 est comprise entre 5mm et 50mm, préférentiellement entre 15mm et 25mm.

## Revendications

1. Face avant (4) pour véhicule automobile (2) avec un capot avant (8), comprenant :
- une traverse supérieure (18) ;
- un élément déformable (22) s'étendant transversalement au-dessus de la traverse supérieure (18) ;
**caractérisée en ce que**
la traverse supérieure (18) comprend une portion centrale (26) et deux portions latérales (32, 32') de part et d'autre de la portion centrale (26), ladite portion centrale (26) étant surélevée par rapport auxdites portions latérales (32, 32') et comprenant des moyens de fixation (30) d'une serrure (24) du capot (8)
et **en ce que** la traverse supérieure (18) forme une cloison s'étendant verticalement vers le bas, la portion centrale (26) de ladite traverse (18) formant une zone en retrait (28) vers l'arrière comprenant les moyens de fixation (30) de la serrure (24).

2. Face avant (4) selon la revendication 1, **caractérisée en ce que** l'élément déformable (22) prend appui sur la traverse supérieure (18) et est destiné à s'étendre sous le capot (8).

3. Face avant (4) selon l'une des revendications 1 et 2, **caractérisée en ce que** l'élément déformable (22) est fixé à la traverse supérieure (18) et comprend des moyens de fixation à un parechoc avant du véhicule (2).

4. Face avant (4) selon l'une des revendications 1 à 3, **caractérisée en ce que** la portion centrale surélevée (26) s'étend transversalement sur une longueur (L₁) comprise entre 20% et 70% de la longueur (L) de la traverse supérieure (18), préférentiellement une longueur comprise entre 40% et 60%.

5. Face avant (4) selon l'une des revendications 1 à 4, **caractérisée en ce que** l'élément déformable (22) forme une poutre transversale épousant la portion centrale (26) et les portions latérales (32, 32') de la traverse supérieure (18).

6. Face avant (4) selon la revendication 5, **caractérisée en ce que** la hauteur moyenne (H₁) de la poutre transversale (22) au niveau de la portion centrale (26) de la traverse supérieure (18) est comprise entre 20% et 80%, préférentiellement entre 50% et 70%, de la hauteur moyenne (H₂) de ladite poutre (22) au niveau des portions latérales (32, 32') de ladite traverse (18).

7. Face avant (4) selon l'une des revendications 1 à **6**, **caractérisée en ce que** la traverse supérieure (18) et/ou l'élément déformable (22) sont venus par moulage, préférentiellement de matière plastique.

8. Face avant (4) selon l'une des revendications 1 à **7**, **caractérisée en ce qu'**elle a un rendement d'amortissement compris entre 30% et 70% pour un choc vertical au niveau de l'élément déformable (22).

9. Face avant (4) selon l'une des revendications 1 à **8**, **caractérisée en ce qu'**elle comprend, en outre, une poutre transversale centrale (16) s'étendant à distance en dessous de la traverse supérieure (18), ladite poutre centrale (16) étant située longitudinalement en avant de la traverse supérieure (18), préférentiellement à plus de 20cm en avant.

## Patentansprüche

1. Frontpartie (4) für Kraftfahrzeug (2) mit einer vorderen Haube (8), die Folgendes umfasst:
- einen oberen Querträger (18);
- ein verformbares Element (22), das sich quer oberhalb des oberen Querträgers (18) erstreckt;
**dadurch gekennzeichnet, dass**
der obere Querträger (18) einen zentralen Abschnitt (26) und zwei seitliche Abschnitte (32, 32') zu jeder Seite des zentralen Abschnitts (26) umfasst, wobei der zentrale Abschnitt (26) in Bezug auf die seitliche Abschnitten (32, 32') überhöht ist und Befestigungsmittel (30) eines Schlosses (24) der Haube (8) umfasst,
und dass der obere Querträger (18) eine Wand bildet, die sich vertikal nach unten erstreckt, wobei der zentrale Abschnitt (26) des Querträgers (18) eine Zone in Rücksprung (28) nach hinten bildet, die Befestigungsmittel (30) des Schlosses (24) umfasst.

2. Frontpartie (4) nach Anspruch 1, **dadurch gekennzeichnet, dass** das verformbare Element (22) auf dem oberen Querträger (18) aufliegt und dazu bestimmt ist, sich unter der Haube (8) zu erstrecken.

3. Frontpartie (4) nach einem der Ansprüche 1 und 2, **dadurch gekennzeichnet, dass** das verformbare Element (22) an dem oberen Querträger (18) befestigt ist und Mittel zum Befestigen an einem vorderen Stoßfänger des Fahrzeugs (2) umfasst.

4. Frontpartie (4) nach einem der Ansprüche 1 bis 3, **dadurch gekennzeichnet, dass** sich der überhöhte zentrale Abschnitt (26) quer auf einer Länge (L₁), die zwischen 20 % und 70 % der Länge (L) des oberen Querträgers (18) liegt, bevorzugt über eine Länge zwischen 40 % und 60 %, erstreckt.

5. Frontpartie (4) nach einem der Ansprüche 1 bis 4, **dadurch gekennzeichnet, dass** das verformbare Element (22) einen Querbalken bildet, der sich an den zentralen Abschnitt (26) und an die seitlichen Abschnitte (32, 32') des oberen Querträgers (18) **anlegt.**

6. Frontpartie (4) nach Anspruch 5, **dadurch gekennzeichnet, dass** die mittlere Höhe (H₁) des Querbalkens (22) im Bereich des zentralen Abschnitts (26) des oberen Querträgers (18) zwischen 20 % und 80 %, bevorzugt zwischen 50 % und 70 % der mittleren Höhe (H₂) des Balkens (22) im Bereich der seitlichen Abschnitte (32, 32') des Querträgers (18) liegt.

7. Frontpartie (4) nach einem der Ansprüche 1 bis 6, **dadurch gekennzeichnet, dass** der obere Querträger (18) und/oder das verformbare Element (22) durch Formen bevorzugt aus Kunststoff aus einem Stück gebildet sind.

8. Frontpartie (4) nach einem der Ansprüche 1 bis 7, **dadurch gekennzeichnet, dass** sie eine Dämpfungsfähigkeit aufweist, die zwischen 30 % und 70 % für einen vertikalen Aufprall im Bereich des verformbaren Elements (22) liegt.

9. Frontpartie (4) nach einem der Ansprüche 1 bis 8, **dadurch gekennzeichnet, dass** sie außerdem einen zentralen Querbalken (16) umfasst, der sich beabstandet unterhalb des oberen Querträgers (18) erstreckt, wobei der zentrale Balken (16) längs vor dem oberen Querträger (18), bevorzugt mehr als 20 cm davor, liegt.

## Claims

1. A front end (4) for a motor vehicle (2) with a front bonnet (8), including:
- an upper crossmember (18);
- a deformable element (22) extending transversely above the upper crossmember (18);
**characterized in that**
the upper crossmember (18) includes a central portion (26) and two lateral portions (32, 32') on either side of the central portion (26), said central portion (26) being raised with respect to said lateral portions (32, 32') and including attachment means (30) of a lock (24) of the bonnet (8)
and **in that** the upper crossmember (18) forms a partition extending vertically downwards, the central portion (26) of said crossmember (18) forming a recessed area (28) towards the rear including the attachment means (30) of the lock (24).

2. The front end (4) according to claim 1, **characterized in that** the deformable element (22) rests on the upper crossmember (18) and is intended to extend under the bonnet (8).

3. The front end (4) according to one of claims 1 and 2, **characterized in that** the deformable element (22) is fixed to the upper crossmember (18) and includes means for attachment to a front bumper of the vehicle (2).

4. The front end (4) according to one of claims 1 to 3, **characterized in that** the raised central portion (26) extends transversely over a length (L₁) comprised between 20 % and 70 % of the length (L) of the upper crossmember (18), preferably a length comprised between 40 % and 60 %.

5. The front end (4) according to one of claims 1 to 4, **characterized in that** the deformable element (22) forms a transverse beam fitting closely the central portion (26) and the lateral portions (32, 32') of the upper crossmember (18).

6. The front end (4) according to claim 5, **characterized in that** the mean height (H₁) of the transverse beam (22) at the level of the central portion (26) of the upper crossmember (18) is comprised between 20 % and 80 %, preferably between 50 % and 70 %, of the mean height (H₂) of said beam (22) at the level of the lateral portions (32, 32') of said crossmember (18).

7. The front end (4) according to one of claims 1 to 6, **characterized in that** the upper crossmember (18) and/or the deformable element (22) are made by moulding, preferably from plastic material.

8. The front end (4) according to one of claims 1 to 7, **characterized in that** it has an absorption performance comprised between 30 % and 70 % for a vertical impact at the level of the deformable element (22).

9. The front end (4) according to one of claims 1 to 8, **characterized in that** it includes, furthermore, a central transverse beam (16) extending at a distance below the upper crossmember (18), said central beam (16) being situated longitudinally in front of the upper crossmember (18), preferably at more than 20 cm in front.
